# EUROPEAN PATENT APPLICATION

(11) **EP 1 520 623 A2**
(43) Date of publication of application: **06.04.2005**
(21) Application number: 04256070.6
(22) Date of filing: 30.09.2004
(51) Int. Cl.: B01L 3/00, G01N 21/03

(54) **Detecting interaction between substance**

(30) Priority: 02.10.2003 JP 2003344862
(71) Applicant: SONY CORPORATION, Tokyo 141 (JP)
(72) Inventor: Segawa, Yuji c/o Sony Corporation, Shinagawa-Ku Tokyo (JP); Yoshio, Akira c/o Sony Corporation, Shinagawa-Ku Tokyo (JP)
(74) Representative: Leppard, Andrew John

(57) **Abstract**

Disclosed herein is a unit for detecting an interaction between substances, including a reaction region for providing sites for the interaction between the substances, at least one pair of opposite electrodes disposed oppositely to each other so as to make it possible to impress an electric field on a medium contained in the reaction region, and an injection hole and an exhaust hole for feeding the medium containing the substances into the reaction region by capillarity.

## Description

### BACKGROUND OF THE INVENTION

The present invention relates to detecting interaction between substances. Embodiments of the present invention relate to a technology for feeding a sample aqueous solution into a predetermined reaction region by utilizing capillarity, and, in addition, to a technology for performing a control of the high-order structures of substances, movements of the substances, fixation of the substances, removal of unnecessary substance, etc. by arranging opposite electrodes in the reaction region where the substances interact with each other and impressing a predetermined electric field.

A principal background art relating to embodiments of the present invention will be described. First, a first background art (related art) is a technology concerning a bioassay integrated substrate so-called DNA chip or DNA microarray (hereinafter referred to generically as "DNA chip") in which predetermined DNAs are finely arranged by the microarray technique (see, for example, Japanese Patent Laid-open No. Hei 4-505763, and Japanese Translations of PCT for Patent No. Hei 10-503841). The DNA chip technology uses a structure in which a multiplicity of kinds of and a multiplicity of DNA oligo-chains, cDNAs (complementary DNAs) and the like are integrated on a glass substrate or a silicon substrate, and is characterized in that it is possible to perform collective analysis of intermolecular interactions such as hybridization. Therefore, DNA chips have been utilized for analysis of variations in genes, SNPs (single nucleotide polymorphism), gene expression frequency analysis, etc. and has come to be utilized widely in drug development, clinical diagnosis, pharmacological genomics, forensic medicine and other fields. Other than the DNA chips, there have also been developed protein chips comprising proteins on a substrate, biosensor chips for analyzing interactions between various substances, and the like.

A second background art is a technology concerning actions of an electric field on substances present in an electrically charged state in a liquid phase. Specifically, it is known that a nucleotide chain (nucleic acid molecule) is stretched or moved under the action of an electric field in a liquid phase. The principle of this phenomenon is considered as follows. Phosphate ions (negative charges) constituting the skeleton of the nucleotide chain and hydrogen atoms (positive charges) formed by ionization of water present in the surroundings of the phosphate ions are considered to be forming ionic fogs, the polarization vectors (dipoles) generated by the negative charges and the positive charges are as a whole aligned in one direction upon application of a high-frequency high voltage, with the result of stretching of the nucleotide chain, and, in addition, when a nonuniform electric field with electric lines of force concentrated on a portion is impressed, the nucleotide chain is moved toward the portion on which the electric lines of force are concentrated (see Seiichi Suzuki, Takeshi Yamanashi, Shin-ichi tazawa, Osamu Kurosawa and Masao Washizu: "Quantitative analysis on electrostatic orientation of DNA in stationary AC electric field using fluorescence anisotropy", IEEE Transaction on Industrial Applications, Vol. 34, No. 1, pp.75-83 (1998)). Besides, it is known that when a DNA solution is placed in fine electrodes having a gap of several tens to several hundreds of micrometers and a high-frequency electric field of about 1 MV/m and 1 MHz is applied thereto, dielectric polarization occurs in the DNA present in a random coil form, resulting in that the DNA molecule is stretched in a straight line form in parallel to the electric field. Then, by this electrodynamic effect called "dielectrophoresis", the polarized DNA is spontaneously drawn to the electrode end, and is fixed in the form of having one end in contact with the electrode edge (see Masao Washizu, "DNA handling conducted while viewing", Visualized Information, Vol. 20, No. 76 (January, 2000)).

The above-mentioned DNA chip technology is a technology in which a reaction region for providing sites for an interaction between substances in a liquid phase is preliminarily set on a substrate, and a detection nucleotide chain such as a probe DNA is preliminarily fixed in the reaction region, to thereby analyze the hybridization which is an interaction between the detection nucleotide chain and a complementary target nucleotide chain.

However, there has been room for improvement in the technique for accurately putting a predetermined tiny volume of a sample aqueous solution to the reaction region being minute in volume. Particularly, for the purposes of suppressing the evaporation of the sample aqueous solution, preventing contamination, and the like, it is expected that a contrivance for forming the reaction region in a more closed space will be attempted now on. In this case, there will be the technical problem that it is difficult to feed the sample aqueous solution into the reaction region by directly using the widespread nozzle dripping system (spotting system).

Next, the conventional DNA chips have had the problems that it takes a long time for performing a hybridization reaction since the efficiency of hybridization is poor and that detection accuracy is low since pseueo-positivity or pseudo-negativity is generated. The main causes of these problems include the steric hindrance arising from the high-order structure of the object substance showing the interaction, the interference (e.g., adhesion or contact) of the substances with the surrounding surfaces, and the presence of a substance which may cause a lowering in detection accuracy at the detection portion serving as a target for irradiation with detection excited rays.

### SUMMARY OF THE INVENTION

Accordingly, embodiments of the present invention seek to provide a novel technology for feeding a sample aqueous solution to a minute reaction region, and to provide a detecting unit with which it is possible to freely perform a control of high-order structures of substances, movements of the substances, fixation of the substances, removal of unnecessary substances, etc., and a method and a bioassay substrate using the detecting unit.

According to one aspect of the present invention, there is provided a unit for detecting an interaction between substances, comprising a reaction region for providing sites for the interaction between the substances, at least one pair of opposite electrodes disposed oppositely to each other so as to make it possible to impress an electric field to a medium contained in the reaction region, and an injection hole and an exhaust hole for feeding a medium containing the substance s into the reaction region by capillarity. The medium may comprise a buffer aqueous solution and/or a gel. According to embodiments there is provided a bioassay substrate including a DNA chip provided with the detecting unit. In embodiments of the present invention, a predetermined minute amount of the aqueous solution dropped to the injection hole can be securely fed toward the reaction region.

Then, in order to prevent an electrochemical reaction due to an ionic solution which may be reserved in the reaction region, it is contrived that the surfaces on the reaction region side of the opposite electrodes are covered with an insulation film. The insulation film can be formed, for example, such a materiaL as SiO₂, SiN, SiOC, SiOF, SiC, TiO₂, etc.

In addition, a surface region surrounding an upper opening portion of the injection hole is made hydrophobic, whereby a hydrophilic medium present in a liquid droplet state (having been dropped) in the surrounding surface region can be smoothly fed into the reaction region which is hydrophilic.

The surface of a first electrode on one side constituting the opposite electrodes can be used as a fixation surface for a detection substance. In this case, the surface of the first electrode is preliminarily subjected to a predetermined surface treatment suited to the desired fixation reaction such as bonding through an avidin-biotin bond or a disulfide bond (-S-S bond). In such a configuration, the electrode serves as an electrode transparent to detection excited rays, so that irradiation with the excited rays can be achieved also from the back side of the electrode.

The area of the first electrode on one side constituting the opposite electrodes arranged in the detecting unit is made to be narrower than the area of a second electrode on the other side opposed to the first electrode, or the area of the portion, fronting on the reaction region, of the first electrode is made to be narrower than the area of the second electrode on the other side opposed to the first electrode, or the surface of the first electrode is formed as a rough surface or rugged surface, or conductive particulates are dispersed on the surface of the first electrode, whereby the surface of the first electrode can be provided with projected portions where the electric lines of force produced between the opposite electrodes are easily concentrated. As a result, a nonuniform electric field can be generated in the vicinity of the surface of the first electrode.

Next, according to one embodiment of the present invention, there is provided a method of fixing a detection substance so contrived that the aqueous solution containing a predetermined detection substance is fed into the reaction region by use of the detecting unit, and the detection substance is fixed onto an electrode surface while impressing an electric field between the opposite electrodes.

In this method, the detection substance such as a DNA probe can be moved while being stretched along the electric field, and can be aligned and fixed relative to a predetermined electrode surface.

In addition, according to one embodiment of the present invention, there is provided a method of accelerating an interaction between substances, comprising a first procedure for feeding the aqueous solution containing a target substance into the reaction region, a second procedure for moving the target substance relative to an electrode surface where the detection substance is fixed while impressing an electric field between the opposite electrodes, and a third procedure for permitting an interaction between the detection substance and the target substance to proceed.

According to this method, the target substance such as a single-chain DNA acting specifically on the fixed detection substance can be collected into an electrode surface region, where the detection substance is fixed, while being stretched under the action of the electric field, and, therefore, the efficiency of the interaction can be enhanced.

The electric field to be impressed is suitably an AC electric field, since the AC electric field can move a nucleic acid such as DNA to a specified location where the electric field is high while stretching the nucleic acid. Besides, in the third procedure, the electric field is turned OFF, whereby the interaction such as hybridization depending on a natural Brownian motion of a natural substance can be permitted to proceed.

Here, principal technical terms used in embodiments of the present invention will be defined. First, the term "interaction" used in embodiments of the present invention widely means chemical bondings inclusive of non-covalent bonding, covalent bonding, and hydrogen bonding and dissociation between substances, and includes hybridization which is a complementary bonding between nucleic acids (nucleotide chains), for example.

Next, the term "opposite electrodes" means at least one pair of electrodes which are arranged oppositely to each other.

The term "nucleotide chain" means a polymer of a phosphoric acid ester of a nucleotide in which a purine or pyrimidine base and a sugar are bonded by glycoside bonding, and widely includes oligonuleotides inclusive of probe DNAs, polynucleotides, DNAs (whole length or sections thereof) formed by polymerization of purine nucleotide with pyrimidine nucleotide, cDNAs (c probe DNAs) obtained by reverse transcription, RNAs, polyamide nucleotide derivatives (PNAs), etc.

The term "hybridization" means a complementary chain (double chain) forming reaction between nucleotide chains having complementary base sequence structures. The term "mishybridization" means the complementary chain forming reaction which is not normal.

The term "reaction region" means a region which can provide reaction sites for hybridization or other interactions, and examples thereof include a reaction site in the shape of a well capable of preserving or holding a medium such as a liquid phase and a gel. The interaction conducted in the reaction region is not narrowly limited, provided that the interaction conforms to the object or effects of the present invention. Examples of the interaction include not only an interaction between single-chain nucleic acids, i.e., hybridization but also an interaction between peptide (or protein) and a desired double-chain nucleic acid formed from a detection nucleic acid, an enzyme response reaction and other intermolecular interactions. Where the double-chain nucleic acid is used, for example, the bonding between a receptor molecule of a hormone receptor or the like which is a transcription factor and a response sequence DNA portion, and the like can be analyzed.

The term "detection substance" is a substance which is preliminarily added into the reaction region and which is present in a free state in the region, or a substance which is present in the state of being fixed to a predetermined surface portion of the reaction region. The detection substance is a substance for capturing and detecting a substance showing a specific interaction with the substance, and includes detection nucleotide chains such as DNA probes.

The term "target substance" means a substance which serves as a target of an interaction with the detection substance, and examples thereof include a nucleotide chain having a base sequence complementary to the DNA probe.

The term "steric hindrance" means a phenomenon in which due to the presence of a bulky substituent group in the vicinity of a reaction center or the like in a molecule, the posture of a reaction molecule, or the steric structure (high-order structure), the access of molecules of the medium species becomes difficult and, as a result, it becomes difficult for the desired reaction (hybridization, in the present patent application) to take place.

The term "dielectrophoresis" is a phenomenon in which molecules are driven toward the higher electric field side in a field where the electric field is anisotropic. Also where an AC voltage is applied, the polarity of polarization is reversed attendant on the reversion of the polarity of the applied voltage, so that the driving effect can be obtain in the same manner as in the case of DC (see "Micromachines and Material Technology (published by C. M. C.)" complied under the supervision of Teru Hayashi, pp.37-46, Chapter 5, Cell and DNA manipulation).

The term "bioassay substrate" means an information integration substrate used for the purpose of biochemical or molecular biological analysis, and includes the so-called DNA chip.

According to embodiments of the present invention, the portion for detecting the interaction is simple in configuration or structure, so that the portion can be manufactured easily. A predetermined quantity of a sample aqueous solution can be securely fed into the reaction region of the detecting unit, so that there will be no loss of the sample aqueous solution. In addition, the sample aqueous solution is fed into the reaction region through a minute hole or holes by utilizing capillarity, so that the opening area of the reaction region can be set small, and evaporation of the aqueous solution can be restrained.

The detection substance and the target substance can be collected onto an electrode surface under the action of an electric field, particularly an AC electric field, so that the concentrations of the substances are raised, and the efficiency of the interaction between the substances can be enhanced. The high-order structures of the detection nucleic acid such as DNA probe and the target nucleic acid can be controlled from a random coil state to a stretched state by the action of application of the electric field, so that the steric hindrance at the time of the interaction can be obviated. As a result, the efficiency and accuracy of the interaction can be enhanced, so that it is possible to shorten the operation time and to prevent pseudo-positivity and pseudo-negativity from being generated.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 shows a top plan view and a sectional view along arrows of line I-I of the top plan view, schematically showing the concept of the basic configuration of a unit (1a) for detecting an interaction between substances according to an embodiment of the present invention;
Fig. 2 is a top plan view along line II-II of the sectional view in Fig. 1;
Fig. 3 is a sectional view along arrows of line I-I of Fig. 1, showing the configuration of a detecting unit (1b) in a modified form;
Fig. 4 is a sectional view along arrows of line I-I of Fig. 1, schematically showing the condition where a DNA probe (D₁) is put into a reaction region (2) of the detecting unit (1a);
Fig. 5 is a sectional view along arrows of line III III of Fig. 1, schematically showing the condition where the DNA probes (D₁) are aligned and fixed to a surface portion of an electrode (E₁);
Fig. 6 is a sectional view along arrows of line I-I of Fig. 1, showing the configuration of a detecting unit (1c) in a modified form;
Fig. 7 is a sectional view along arrows of line I-I of Fig. 1, showing the configuration of a detecting unit (1d) in a modified form;
Fig. 8 is a sectional view along arrows of line I-I of Fig. 1, showing the configuration of a detecting unit (1e) in a modified form;
Fig. 9 is a partial sectional view showing a modified form of a fixation electrode (E₁);
Fig. 10 is a partial sectional view showing another modified form of the fixation electrode (E₁);
Fig. 11 is a partial sectional view showing a further modified form of the fixation electrode (E₁);
Fig. 12 is a sectional view along arrows of line I-I of Fig. 1, showing the configuration of a detecting unit (1f) in a modified form;
Fig. 13 is an enlarged view for illustrating a preferable method of feeding an aqueous solution (L) which can be applied in common to the detecting units (1a-1f) according to an embodiment of the present invention;
Fig. 14 is an enlarged view for illustrating another preferable method of feeding the aqueous solution (L) which can be applied in common to the detecting units (1a-1f) according to an embodiment of the present invention; and
Fig. 15 is a view showing one example of a disk-like substrate (10) on which the detecting units (1a-1f) according to an embodiment of the present invention are arranged.

### DETAILED DESCRIPTION OF THE PREFERRED EMBODIMENTS

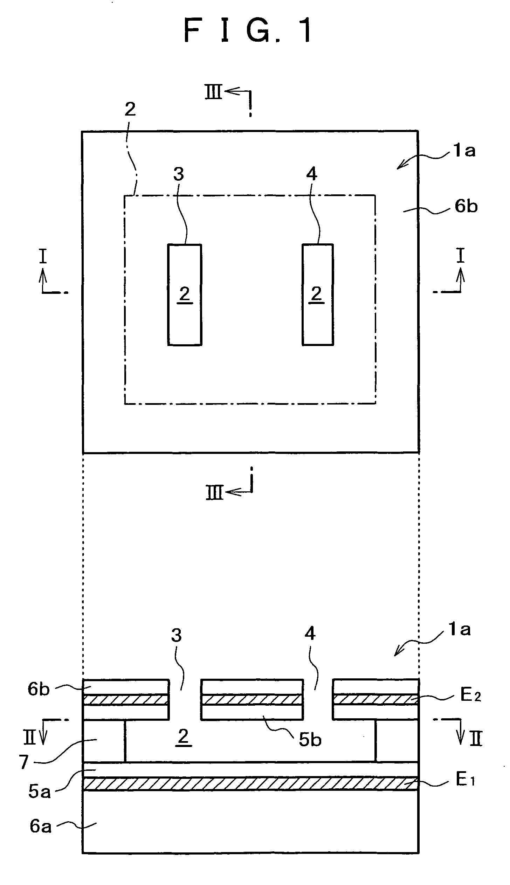

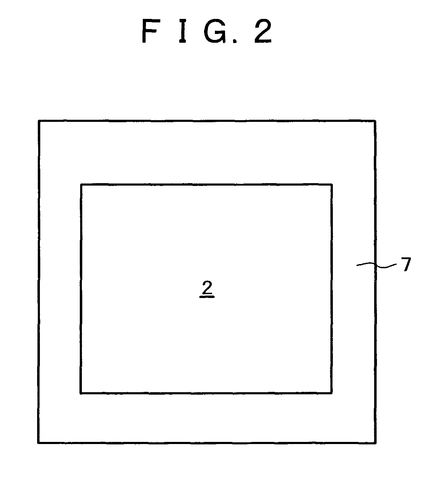

Now, a preferred embodiment of the present invention will be described below referring to the accompanying drawings. First, Fig. 1 is a top plan view and a sectional view along arrows of line I-I of the top plan view, schematically showing the concept of the basic configuration of a unit for detecting an interaction between substances (hereinafter referred to simply as "detecting unit") according to an embodiment of the present invention. Fig. 2 is a top plan view along line II-II of the sectional view in Fig. 1.

Symbol 1a in Fig. 1 denotes the configuration of an essential part of one preferred embodiment of the detecting unit. The detecting unit 1a is formed on a substrate formed of a glass, a synthetic resin or the like, and is a portion contrived for detecting an interaction between substances. The size of the detecting unit 1a is, for example, about 100 µm in length by about 100 µm in width by about 5 µm in height (depth), and the height (depth) may be appropriately determined according to the molecular length of a detection substance such as probe DNA used (this applies also to other embodiments of the detecting unit).

The detecting unit 1a and other detecting units 1b and the like described later are each provided with a reaction region 2 capable of reserving an aqueous solution to be used as sites for the interaction between the substances, holes 3 and 4 (described later) of about 10 µm × 20 µm in size for communication between the reaction region 2 and the outside air, and a pair of opposite electrodes E₁, E₂ disposed on the upper and lower sides of the reaction region 2 (see the sectional view in Fig. 1).

At least the electrode (e.g., electrode E₁) on one side, of the opposite electrodes E₁ and E₂, or both the electrodes E₁ and E₂ may each be formed of a transparent conductor, for example, ITO (indium tin oxide). Where the electrode or electrodes are formed of the transparent conductor, the electrodes are transparent to detection excited rays, so that the system is suitable for use in the case of detecting the interaction in the reaction region based on measurement of light emission intensity by an optical means.

The surfaces, fronting on the reaction region 2, of the opposite electrodes E₁ and E₂ are covered respectively with insulation layers 5a and 5b (see the sectional view in Fig. 1), which play the role of preventing an electrochemical reaction due to an ionic solution which may be reserved in the reaction region 2. Incidentally, the insulation layers 5a and 5b can be formed of such a material as SiO₂, SiN, SiOC, SiOF, SiC, TiO₂, etc. In addition, the layer on the lower side of the opposite electrode E₁ shown is a substrate 6a formed of a synthetic resin or the like, and, similarly, the layer on the upper side of the opposite electrode E₂ shown is a substrate 6b formed of a synthetic resin or the like (see the sectional view in Fig. 1). Therefore, the electrode E₁ is sandwiched between the insulation layer 5a and the substrate 6a, whereas the electrode E₂ is sandwiched between the insulation layer 5b and the substrate 6b.

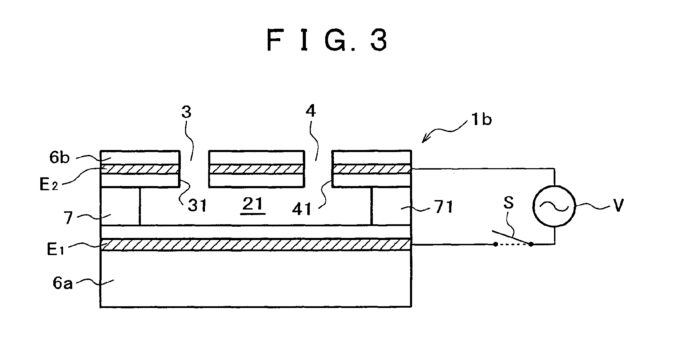

Symbol 7 shown in Fig. 1 and the like denotes a spacer formed of an inorganic material such as SiO₂ or of, for example, a synthetic resin such as polyimide. Thus, the thickness of the spacer 7 determines the height (depth) of the reaction region 2 (see Fig. 1), and the shape of the spacer 7 determines the shape and volume of the reaction region 2 (see Fig. 2). Incidentally, as in the detecting unit 1b in a modified form shown in Fig. 3, a spacer 71 with such a shape and size as to be flush with wall surfaces 31, 41 of holes 3, 4 may be adopted, whereby a reaction region 21 in the form shown in Fig. 3 can be formed.

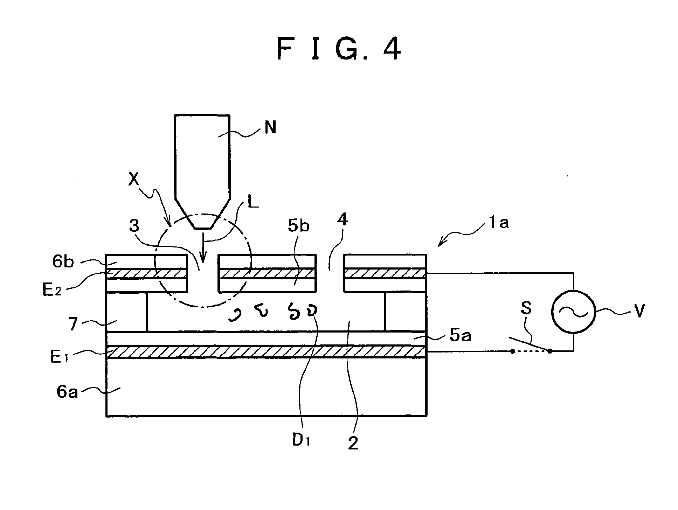

Next, Fig. 4 is a sectional view along arrows of line I-I of Fig. 1, schematically showing the condition where a DNA probe D₁ which is a representative example of the detection substance is put into the reaction region 2 of the detecting unit 1a. In this case, a switch S is turned OFF, so that application of an electric field between the electrodes E₁ and E₂ by a power source V is not being performed (see Fig. 3).

An aqueous solution L containing the DNA probe D₁ is dropped from a nozzle denoted by symbol N to the injection hole 3, and then fed into the reaction region 2 by capillarity. In this instance, the hole denoted by symbol 4 functions as an exhaust hole for permitting the action of the capillarity. Incidentally, the DNA probe D₁ thus dropped has a random coil form high-order structure.

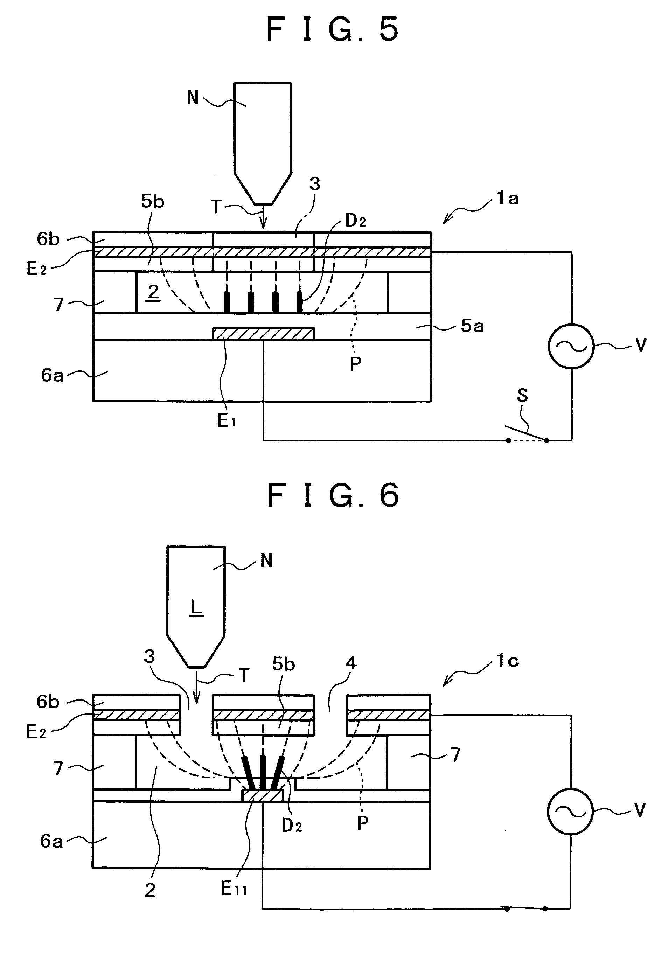

Next, Fig. 5 is a sectional view along arrows of line III-III of Fig. 1, schematically showing the condition where the DNA probes D₁ which are representative examples of the detection substance D are aligned and fixed to a surface portion of the electrode E₁.

Fig. 5 shows the condition in which immediately after the aqueous solution L containing the DNA probes D₁ is fed into the reaction region 2 (see Fig. 4), the switch S is turned ON to impress a high-frequency AC electric field (symbol P in Fig. 3) between the opposite electrodes E₁ and E₂ by the power source V, whereby the DNA probes D₁ are aligned and fixed to the surface of the electrode E₁ while being stretched along the electric lines of force. Incidentally, the electric field in this case is preferably about 1 × 10⁶ V/m and about 1 MHz (see Masao Washizu and Osamu Kurosawa: "Electrostatic Manipulation of DNA in Microfabricated Structures", IEEE Transaction on Industrial Application, Vol. 26, No. 26, pp.1165-1172 (1990)). The DNA probe in the fixed state is denoted by symbol D₂ in Fig. 5, and symbol T denotes a target DNA having a base sequence complementary to the stretched and fixed DNA probe D₂.

Where the surface of the electrode E₁ is surface treated with streptoavidin, the system is suitable for fixation of the terminal end of biotinated DNA probe. Alternatively, where the surface of the electrode E₁ is surface treated with a thiol (SH) group, the system is suited to fixation of a DNA probe having a thiol group-modified terminal end by the disulfide bond (-S-S bond). Incidentally, the electrode E₂ on the upper side may be utilized as the fixation electrode.

Here, as in the case of a detecting unit 1c shown in Fig. 6, it may be contrived that the area of the fixation electrode E₁ is designed to be narrower than the area of the opposite electrode E₂, whereby the electric field P is concentrated more on the electrode E₁₁, so that a nonuniform electric field is generated on the surface of the electrode E₁₁. By this it is possible to enhance the effect of dielectrophoresis.

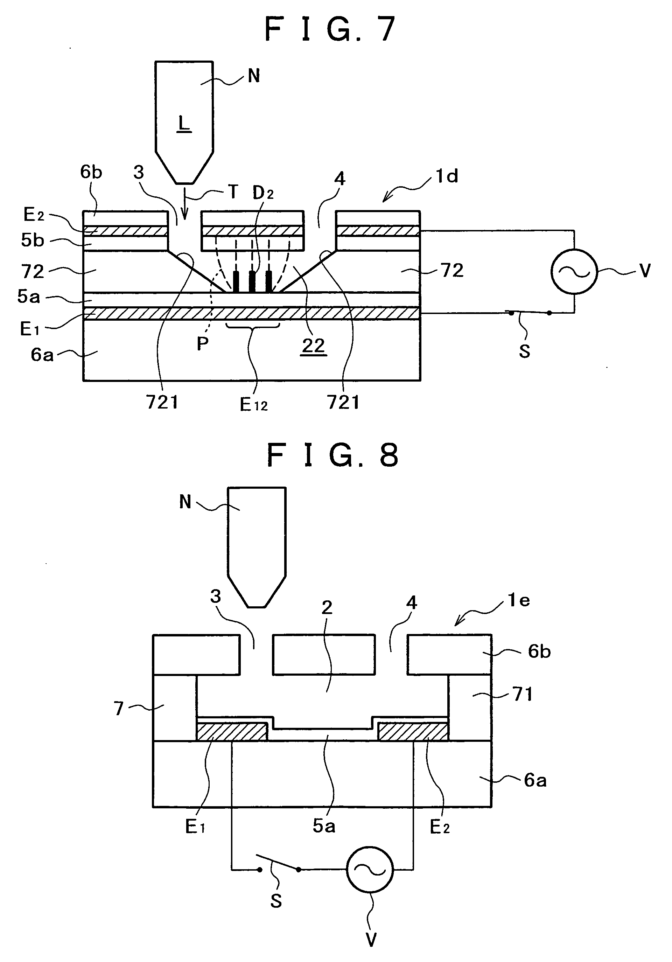

In addition, in the case of a detecting unit 1d shown in Fig. 7, an end face 721 fronting on the reaction region 22 of the spacer 72 is formed as an inclined surface, whereby the area of the portion (see symbol E₁₂) fronting on the reaction region 22 of the electrode E₁ is narrowed, with the result that the effect of the dielectrophoresis can be enhanced similarly to the above.

A detecting unit 1e shown in Fig. 8 represents an embodiment in which, different from the detecting units 1a to 1d having electrodes opposed to each other and disposed on the upper and lower sides of the reaction region 2 and the like, a pair of electrodes E₁ and E₂ enabling application of an electric field are disposed at the bottom surface of the reaction region 2 so that their edge portions are opposed to each other. In this embodiment, the substrate 6b on the upper side is not provided with an electrode, so that the configuration is simplified. In this detecting unit 1e, also, the electrode on one side may be formed to be narrower than the electrode on the other side, for the purpose of enhancing the effect of the dielectrophoresis in the same manner as in Fig. 6. Incidentally, the descriptions of other symbol portions relating to the detecting unit 1e are the same as in the above-described embodiments and, therefore, are omitted here.

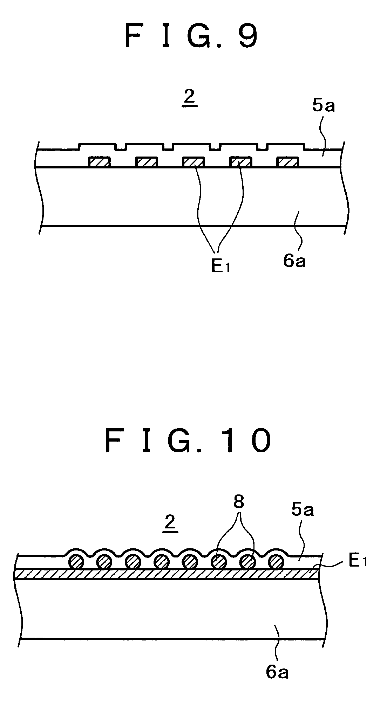

Here, as shown in Figs. 9 to 11, in embodiments of the present invention, the surface of the fixation electrode E₁ may be processed into such a shape that the electric field (electric lines of force) will easily be concentrated thereon. Specifically, as shown in Fig. 9, when the electrode E₁ is provided with a rugged pattern, the electric field will be concentrated on the rugged portion. A method for forming such a rugged pattern may comprise the steps of forming an electrode pattern of, for example, ITO in an arbitrary shape on a lower substrate 6a by photolithography, then again forming a film of ITO thereon, and forming an insulation film 5a of SiO₂ or the like, whereby the electrode E₁ composed of the rugged pattern as shown in Fig. 9 can be formed.

Besides, as shown in Fig. 10, before an insulation layer 5a is formed on the surface of an electrode E₁ formed of ITO or the like, conductive particulates 8 may be dispersed, whereby a rugged pattern can be formed. Incidentally, as the particulates 8, there can be adopted particulates of metals, conductive polymers, inorganic materials such as SiO₂, and the like.

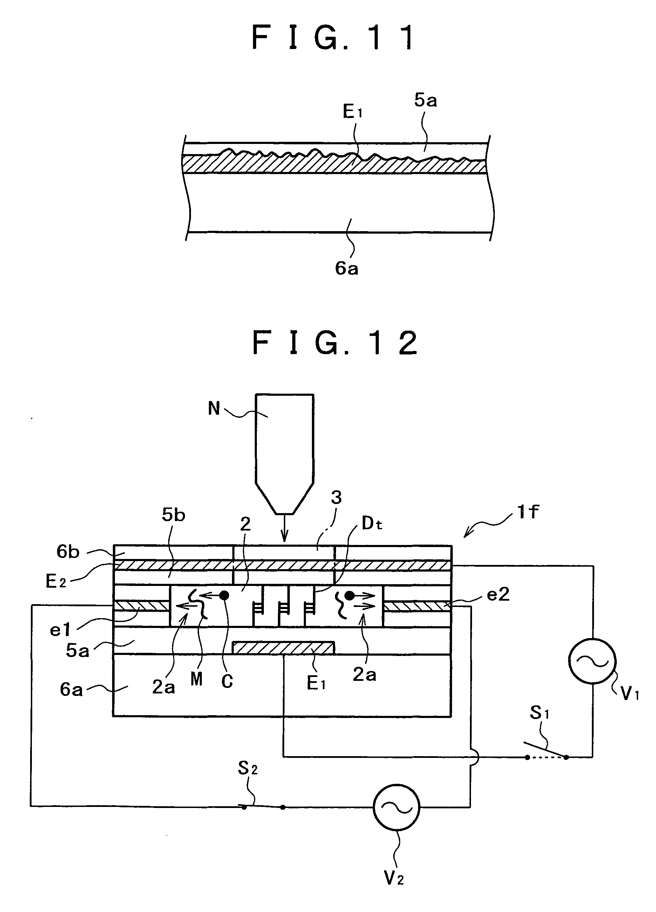

Further, as shown in Fig. 11, in the case of forming an insulation layer 5a of SiO₂ or the like on the surface of an electrode E₁ formed of ITO or the like, the surface roughness of the insulation layer 5a may be controlled through film forming conditions to thereby form a film with a high surface roughness, whereby an electric field can be locally concentrated by utilizing the ruggedness. Incidentally, in controlling the surface roughness, a film of SiO₂ of not more than 10 nm in thickness, for example, may be again formed on the insulation layer 5a once formed, whereby the surface is provided with ruggedness.

After the DNA probe is drawn by the coulomb force and fixed to the surface of the electrode E₁ or the like by concentrating the electric field as above-mentioned, a predetermined cleaning aqueous solution is fed into the reaction region 2 in the same manner as the above-mentioned aqueous solution L, or is forcibly injected into the reaction region 2, or is put into the reaction region 2 by once opening the reaction region 2 through detaching the electrode substrate on the upper side, whereby surplus DNA probes and probe DNAs adsorbed non-specifically can be removed from the reaction region 2, followed by drying.

Into the reaction region 2 or the like of the detecting unit 1a or the like obtained as above-described, an aqueous solution containing a target DNA denoted by symbol T is fed via the injection hole 3 by utilizing capillarity. Here, by applying an electric field to the target DNA, the structure of the target DNA can be controlled from a random coil form high-order structure to a stretched structure, and the target DNA can be moved (dielectrophoresis) to the surface of the fixation electrode E₁ or the like, in the same manner as in the case of the DNA probe. Then, the electric field is once turned OFF, and the hybridization is made to proceed under natural Brownian motion.

The hybridization can be detected by a method in which a fluorescent substance labeled on the DNA probe, a fluorescent intercalator inserted and bonded to a double-chain DNA or the like, for example, is irradiated with excited rays with a predetermined wavelength, and the hybridization is detected based on the intensity of the fluorescence. Incidentally, the fluorescent intercalator may be preliminarily mixed into the aqueous solution containing the target substance, or may be dropped into the reaction region 2 after the hybridization.

Here, in a detecting unit 1f in a modified form as shown in Fig. 12, a double-chain DNA produced by hybridization is schematically drawn and denoted by symbol Dt. After the hybridization, however, surplus intercalator C may be present, and mishybridized DNA denoted by symbol M may also be present, leading to a lowering in detection accuracy.

In view of this, a contrivance may be made in which opposite electrodes e1-e2 having an opposition axis intersecting that of the opposite electrodes E₁-E₂ are arranged, and a high-frequency AC electric field is impressed therebetween, thereby to draw the surplus intercalators C and mishybridized DNAs denoted by symbol M to the sides of the electrodes e1 and e2, and to remove these substances C and M from the vicinity of the surface of the electrode E₁, whereby detection accuracy can be enhanced. Incidentally, symbol S₂ in Fig. 12 is a switch for impressing a voltage between the opposite electrodes e1-e2 through a power source denoted by symbol V₂.

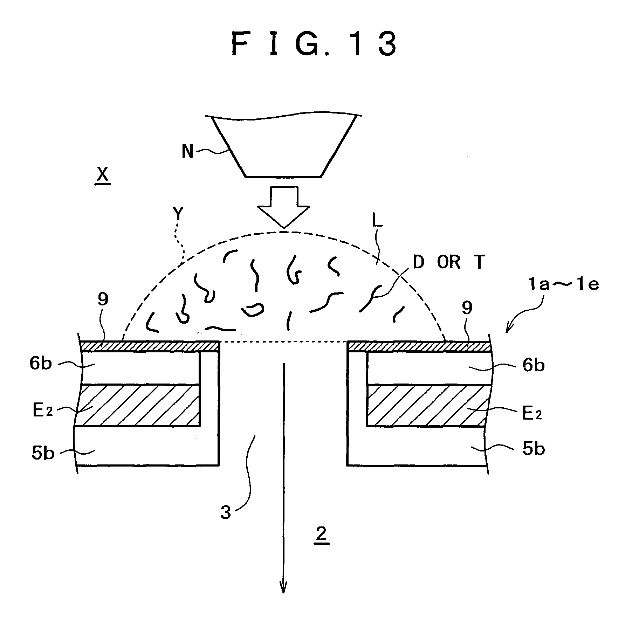

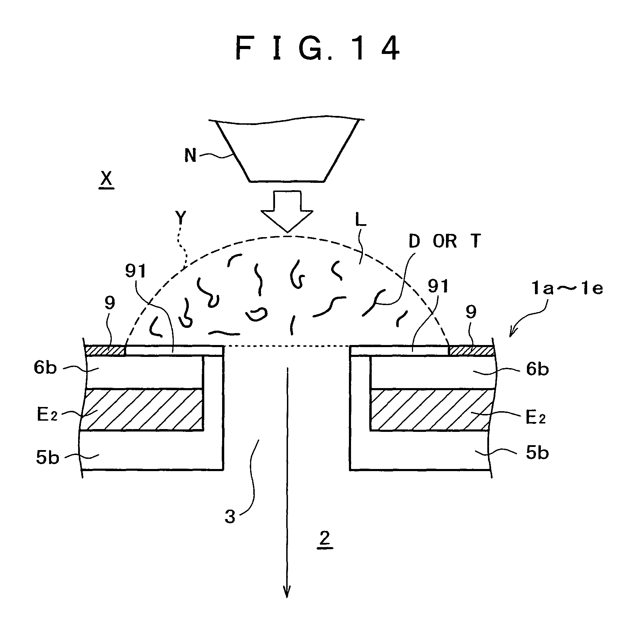

Figs. 13 and 14 are views for illustrating a preferable method for feeding the aqueous solution L which can be applied in common to the above-described detecting units 1a to I f according to embodiments of the present invention. Incidentally, Figs. 13 and 14 are enlarged views of part X showing the vicinity of the injection hole 3 shown in Fig. 4.

The whole area of the upper substrate 6b or at least the surface of the vicinity of the injection hole 3 is preliminarily treated with an alkylsilane or the like to form a hydrophobic layer 9 (see Fig. 13). Then, from above the injection hole 3, a sample aqueous solution (containing a detection substance D and a target substance T) denoted by symbol L is dropped via a nozzle N by an ink jet system or a dispenser system, to form a liquid droplet as indicated by broken line in Fig. 13. Since the droplet Y is an aqueous solution and therefore hydrophilic as contrasted to the hydrophobic layer 9, the droplet Y swiftly receives the action of capillarity and is gradually sucked into the reaction region 2.

Alternatively, as in the configuration shown in Fig. 14, the whole area of the upper substrate 6a or at least the surface of the vicinity of the injection hole 3 is preliminarily treated with an alkylsilane or the like to form a hydrophobic layer 9, and only the vicinity of the injection hole 3 may be preliminarily irradiated with UV rays to form a hydrophilic layer 91. In this case, the dropped liquid droplet Y can be once securely held in the vicinity of the injection hole 3 by the hydrophilic layer 91, and thereafter the droplet 91 can be fed into the reaction region 2 under the action of capillarity.

When such a method is used, only a required amount of the aqueous solution L can be fed into the reaction region 2, so that loss of the aqueous solution can be suppressed. In addition, since the aqueous solution L fed in by utilizing the capillarity is enclosed in the reaction region 2 having few opening portions, the evaporation of the aqueous solution L can be restrained. From this point of view, it is desirable that the injection hole 3 and the exhaust hole 4 be as small as possible.

However, the evaporation of the aqueous solution L cannot be prevented perfectly, since the reaction region 2 has opening portions. In view of this, it may be contrived that the detection substance D and the target substance T are dispersed in a gel, the gel is dropped toward the injection hole 3, and the gel is fed into the reaction region 2 by capillarity. This makes it possible to confine the aqueous solution into the network structure of the gel, thereby restraining the evaporation of the aqueous solution.

In addition, in order to prevent the evaporation of the aqueous solution L, there may be adopted a method in which a quick-drying polymer or the like is dropped to the injection hole 3 and the exhaust hole 4 to seal off the holes, after the aqueous solution L is fed into the reaction region 2. In this case, if the intercalator is used, it is desirable to preliminarily mix the intercalator into the aqueous solution containing the target substance T.

Where the detecting units denoted by symbols 1a-1f as above-described are arranged in a predetermined pattern on a substrate, it is possible to provide a bioassay substrate such as DNA chip with which interactions such as hybridization can be made to proceed speedily and collective analysis can be performed.

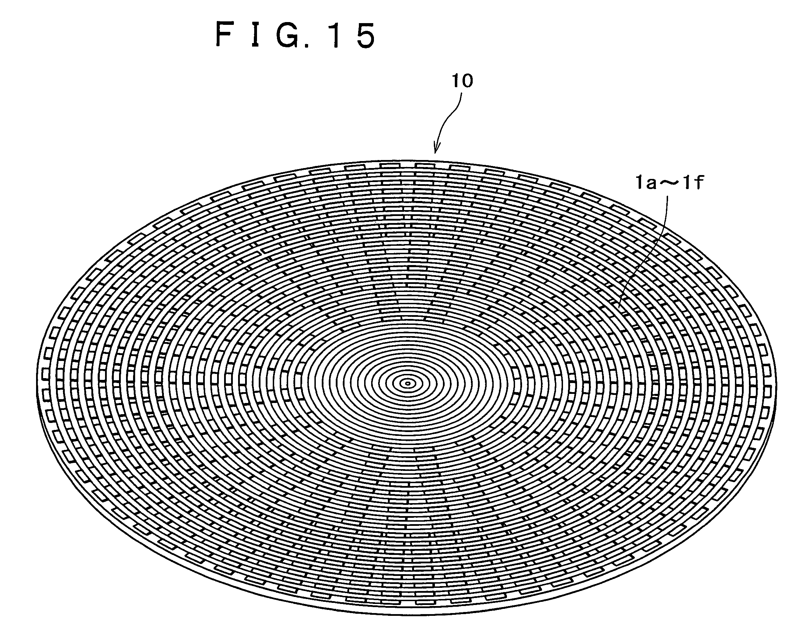

Fig. 15 is a view showing one example of the bioassay substrate. As shown in Fig. 15, for example, a disk form substrate 10 can be provided with a multiplicity of detecting units 1a and the like which can be divided into groups.

Incidentally, the detection of the interaction proceeding at any detecting unit 1a or the like provided on the substrate 10 can be carried out by use of a known optical detection means by which a fluorescent substance preliminarily marked onto the detection substance fixed to the surface of the electrode E₁ or a fluorescent intercalator inserted and bonded to a substance (double-chain nucleic acid) showing an interaction is irradiated with fluorescence exciting rays at a predetermined wavelength and the fluorescence is detected. Alternatively, a method may be adopted in which the light-emitting image of the detecting unit 1a and the like is picked up, and the quantity of light obtained from the image is quantitatively analyzed and detected.

Embodiments of the present invention promise a high efficiency of the interaction such as hybridization at the detecting unit, so that it is possible to largely shorten the time required for the interaction. Besides, since it is possible to form an environment promising an easy progress of the interaction with high accuracy, it is possible to suppress the generation of pseudo-positivity or pseudo-negativity. Therefore, embodiments of the present invention can be utilized for a bioassay substrate such as DNA chip which has such characteristics that the efficiency of the assay operation for interaction detection is excellent and that the detection accuracy is high.

A unit for detecting an interaction between substances, including a reaction region for providing sites for the interaction between the substances, at least one pair of opposite electrodes disposed oppositely to each other so as to make it possible to impress an electric field on a medium contained in the reaction region, and an injection hole and an exhaust hole for feeding the medium containing the substances into the reaction region by capillarity is provided.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A unit for detecting an interaction between substances, comprising:
a reaction region for providing sites for the interaction between said substances, at least one pair of opposite electrodes disposed oppositely to each other so as to make it possible to impress an electric field on a medium contained in said reaction region, and an injection hole and an exhaust hole for feeding said medium containing said substances into said reaction region by capillarity.

2. A unit for detecting an interaction between substances as set forth in claim 1, wherein the surfaces on said reaction region side of said opposite electrodes are covered with an insulation film.

3. A unit for detecting an interaction between substances as set forth in claim 1, wherein a surface region surrounding an upper opening portion of said injection hole is hydrophobic.

4. A unit for detecting an interaction between substances as set forth in claim 1, wherein the surface of a first electrode on one side constituting said opposite electrodes is a fixation surface for a detection substance.

5. A unit for detecting an interaction between substances as set forth in claim 4, wherein said first electrode is formed of a conductor.

6. A unit for detecting an interaction between substances as set forth in claim 1, wherein the area of a first electrode on one side constituting said opposite electrodes is narrower than the area of a second electrode on the other side opposed to said first electrode.

7. A unit for detecting an interaction between substances as set forth in claim 1, wherein the area of a portion, fronting on said reaction region, of a first electrode on one side constituting said opposite electrodes is narrower than the area of a second electrode on the other side opposed to said first electrode.

8. A unit for detecting an interaction between substances as set forth in claim 1, wherein the surface of a first electrode on one side constituting said opposite electrodes is a rough surface or rugged surface.

9. A unit for detecting an interaction between substances as set forth in claim 1, wherein conductive particulates are dispersed in the surface of a first electrode on one side constituting said opposite electrodes.

10. A bioassay substrate provided with said interaction detecting unit as set forth in claim 1.

11. A method of fixing a detection substance, using a unit for detecting an interaction between substances, said unit comprising a reaction region for providing sites for said interaction between said substances, at least one pair of opposite electrodes disposed oppositely to each other so as to make it possible to impress an electric field on a medium contained in said reaction region, and an injection hole and an exhaust hole for feeding said medium containing said substances into said reaction region by capillarity, wherein
an aqueous solution containing a predetermined detection substance is fed into said reaction region, and said detection substance is fixed to an electrode surface while impressing an electric field between said opposite electrodes.

12. A method of accelerating an interaction between substances, using a unit for detecting said interaction between said substances, said unit comprising a reaction region for providing sites for said interaction between said substances, at least one pair of opposite electrodes disposed oppositely to each other so as to make it possible to impress an electric field on a medium contained in said reaction region, and an injection hole and an exhaust hole for feeding said medium containing said substances into said reaction region, wherein
said method comprises a first procedure for feeding an aqueous solution containing a target substance into said reaction region, a second procedure for moving said target substance relative to an electrode surface on which a detection substance is fixed, while impressing an electric field between said opposite electrodes, and a third procedure for permitting the interaction between said detection substance and said target substance to proceed.

13. A method of accelerating an interaction between substances as set forth in claim 11, wherein a power source is turned OFF in said third procedure.
